# FASCICULE DE BREVET EUROPEEN

(11) **EP 0 463 950 B1**
(45) Date de publication et mention de la délivrance du brevet: **30.11.1994**
(21) Numéro de dépôt: 91401694.4
(22) Date de dépôt: 21.06.1991
(51) Int. Cl.: H01Q 3/20, H01Q 3/30, H01Q 1/28, H01Q 1/12, F16H 21/04

(54) **Dispositif de déplacement d'un organe et application au pointage d'un réflecteur d'antenne**
Vorrichtung zum Verschieben eines Teils und Anwendung bei der Ausrichtung des Reflektors einer Antenne
Device for displacement of an element and application for the pointing of the reflector of an antenna

(30) Priorité: 25.06.1990 FR 9007936
(43) Date de publication de la demande: 02.01.1992
(73) Titulaire: MATRA ESPACE Société Anonyme, 75116 Paris (FR)
(72) Inventeur: Souliac, Michel, F-92240 L'Hay Les Roses (FR); Bruneau, Bertrand, F-75015 Paris (FR)
(74) Mandataire: Fort, Jacques

(56) Documents cités:
- EP-A- 0 060 341
- DE-A- 1 804 250
- DE-A- 2 204 448
- FR-A- 2 502 404
- GB-A- 2 205 914
- US-A- 4 697 467

## Description

La présente invention a pour objet un dispositif de déplacement permettant de donner à un organe une position déterminée, dans un domaine de dimensions limitées, lorsqu'il coopère avec des moyens supplémentaires, de nature quelconque, supprimant un degré de liberté dans le déplacement de l'organe.

L'invention vise plus particulièrement à fournir un dispositif de déplacement de constitution simple, permettant d'éviter les imprécisions et erreurs des dispositifs classiques lors des inversions de sens de déplacement.

L'invention propose dans ce but un dispositif de déplacement d'organe comprenant deux bras de transmission rigides ayant chacun une extrémité articulée audit organe et une autre extrémité reliée par une articulation à un chariot respectif de déplacement sur une voie parallèle à une direction déterminée, caractérisé en ce que chacun des chariots comporte un tambour rotatif autour d'un axe perpendiculaire à ladite direction et muni de moyens d'entraînement, une bande inextensible et flexible, tendue entre deux ancrages alignés suivant ladite direction et ne pouvant pas glisser sur le tambour est enroulée sur ce dernier.

Dans un mode avantageux de réalisation, la bande est en deux tronçons, fixés chacun à un ancrage respectif et placés côte à côte sur le tambour avec un arc d'enroulement maximum qui dépend de l'ampleur du domaine dans lequel les déplacements doivent être réalisés. L'un des tronçons est avantageusement relié à son ancrage par des moyens élastiques permettant de maintenir les deux tronçons tendus et d'éviter tout jeu.

Suivant que les moyens destinés à supprimer un degré de liberté maintiennent ou non l'organe dans un plan déterminé passant par les voies, les articulations peuvent être à un seul axe ou doivent au contraire être universelles. Dans le second cas, elles peuvent notamment être constituées par des rotules ou des joints de Cardan.

L'invention trouve une application particulièrement importante, bien que non exclusive, dans le pointage du réflecteur, en général parabolique, d'une antenne, permettant de modifier l'orientation du réflecteur par un mouvement qui peut être regardé comme résultant de la composition de deux mouvements de rotation autour d'axes orthogonaux entre eux et passant par le foyer du réflecteur.

Le problème du pointage précis d'un réflecteur d'antenne se pose en particulier sur les satellites de télécommunication, où le lobe d'antenne doit être dirigé vers un satellite en orbite basse ou vers un récepteur ou émetteur terrestre.

On a déjà proposé de pointer une antenne en fixant le réflecteur sur un bras relié à un support appartenant au corps du satellite par un joint de Cardan placé au foyer du réflecteur et en reliant le support au bras par des vérins linéaires. Mais les vérins se prêtent mal aux courses importantes, du fait notamment des pertes de précision et des risques de flambage lorsque le vérin présente son extension maximum.

L'invention propose également une application du dispositif de déplacement ci-dessus défini au pointage d'un réflecteur d'antenne, ledit organe étant alors fixé à un bras portant le réflecteur et relié à un point fixe non aligné avec les voies par un joint universel, tel qu'un joint de Cardan.

Les bras de transmission restent de longueur constante et peuvent être réalisés de façon à avoir la rigidité requise pour cette longueur. Leurs liaisons avec le bras portant le réflecteur et avec le chariot peuvent être constituées par des rotules, pour éviter le montage en cascade de roulements. Pour lubrifier les rotules on utilise des lubrifiants synthétiques hydrocarbonés à faible tension de vapeur. Pour limiter l'évaporation de lubrifiant dans les conditions de vide poussé qui règnent dans l'espace, les rotules peuvent être placées dans des soufflets déformables qui délimitent un compartiment qui n'est relié à l'extérieur que par un trou de très faible dimension, d'équilibrage des pressions.

Dans cette application, le dispositif selon l'invention présente de nombreux avantages. L'angle dont tourne le réflecteur est très inférieur (en général d'au moins un ordre de grandeur) à l'angle de rotation des tambours rotatifs. Les moyens d'entraînement des tambours peuvent être constitués par des moteurs électriques irréversibles donnant une grande précision de positionnement. Les moteurs sont placés à proximité immédiate du support, ce qui est avantageux en cas de montage dans l'espace car les conditions thermiques de fonctionnement peuvent ainsi être très améliorées.

L'invention sera mieux comprise à la lecture de la description qui suit d'un mode particulier de réalisation du dispositif, appliqué à l'orientation d'un réflecteur d'antenne, donné à titre d'exemple non limitatif. La description se réfère aux dessins qui l'accompagnent, dans lesquels :

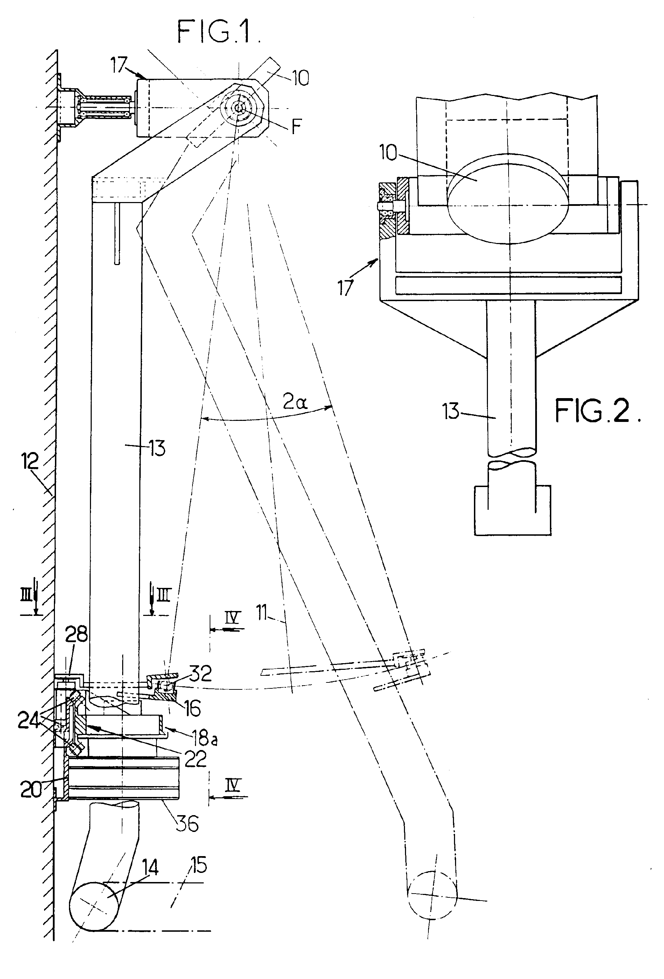

- la figure 1 est un schéma de principe, en élévation et en coupe partielle, montrant les composants principaux d'un mécanisme d'orientation de réflecteur d'antenne incorporant un dispositif de déplacement suivant l'invention ;
- la figure 2 est une vue de droite des parties haute et basse du mécanisme de la figure 1 ;
- la figure 3 est une vue en coupe suivant la ligne III-III de la figure 1 ;
- la figure 4 est une vue de la figure 1, suivant les flèches IV-IV ;
- la figure 5 est un schéma en perspective destiné à montrer la façon dont les tronçons de bande inextensible sont enroulés autour du tambour et fixés à ce dernier et au support ;
- les figures 6 et 7 sont des vues de détail à grande échelle, en coupe, montrant une constitution possible des moyens d'articulation reliant les bras de transmission aux chariots et/ou à l'organe déplaçable du dispositif.

Le mécanisme montré sur les figures est destiné à orienter un réflecteur non représenté, en forme de calotte de paraboloïde excentrée d'axe principal 11, par rapport à un support 12 constitué par le corps d'un satellite, par rotation autour du foyer F où se trouve une source 10.

Le mécanisme comporte un bras rigide 13, qui peut être tubulaire et constitué en matériau composite fibres de carbone-araldite. Un prolongement 15 portant le réflecteur est relié au bras par une articulation verrouillable 14, afin d'autoriser le repliement du prolongement et l'application du réflecteur contre le support 12 lors du lancement du satellite.

Le bras 13 est porté par le support 12 par l'intermédiaire d'un joint lui permettant de prendre n'importe quelle orientation dans un cône centré sur le foyer F et dont l'angle au sommet 2α correspond à la plage de pointage nécessaire. Dans la pratique, l'angle au sommet 2α dépassera peu 10 degrés. Un angle de 12 degrés a été prévu pour un satellite de télécommunication à l'heure actuelle en projet.

Le fonctionnement dans l'espace restreint la possibilité de lubrification du joint 17. Ce dernier pourra pour cette raison être d'un type n'ayant pas de liaison de glissement. Une solution satisfaisante consiste à utiliser un joint de Cardan à roulements porté par le support 12 et dont le cadre intermédiaire est évidé pour laisser la place nécessaire à la source 10.

Le dispositif d'entraînement du bras 13 est interposé entre le support 12 et l'organe 16 fixé en un point intermédiaire du bras et pouvant être une plaque ou un gousset. L'emplacement et la constitution de ce dispositif sont tels qu'il n'occulte pas le lobe d'antenne.

Le dispositif d'entraînement a une constitution symétrique et peut être regardé comme formé de deux ensembles 18a et 18b dont un seul sera décrit. L'ensemble 18a comporte une voie de circulation 20 orthogonale au plan défini par le joint 17 d'articulation du bras 13 et par le plan médian de ce dernier lorsqu'il occupe une position moyenne dans son domaine de déplacement. Cette voie 20 est alignée avec la voie correspondante de l'ensemble 18b. Sur la voie 20 circule un chariot 22 ayant un corps muni de galets 24 de roulement sur des pistes ménagées sur la voie 20.

Un bras de transmission 26 est relié au chariot 22 par une première articulation 28 et à l'organe entraîné 16 par une autre articulation 32 qui peut être identique à la première. Dans le cas illustré, l'organe 16 ne reste pas dans un même plan lors de la mise en action du dispositif et en conséquence les articulations doivent être des joints universels.

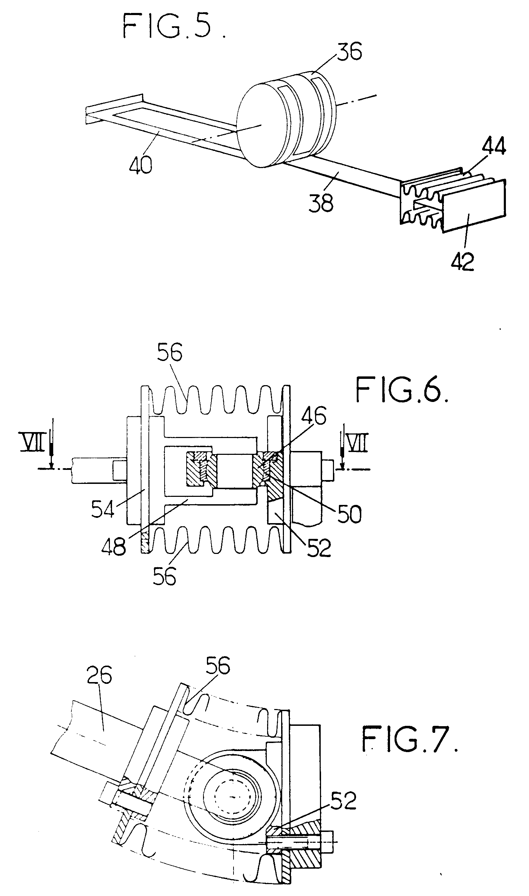

Le corps du chariot contient le stator d'un moteur électrique d'entraînement dont le rotor 34 porte un tambour 36. Le rotor 34 et le tambour 36 tournent ainsi simultanément autour d'un axe orthogonal à la direction de déplacement du chariot 22 sur la voie 20. Sur le tambour est enroulée une fraction d'une bande inextensible et flexible tendue entre deux ancrage alignés suivant la direction de déplacement du chariot, de sorte que la rotation du tambour provoque un déplacement en translation du chariot. Dans le mode avantageux de réalisation représenté sur les figures 4 et 5, la bande est en deux tronçons d'égale largeur. Une extrémité de chaque bande est fixée à un ancrage appartenant à la voie 20. L'autre extrémité est fixée au tambour. Il est préférable de disposer les deux tronçons symétriquement par rapport au plan médian du tambour 36. Dans le cas illustré sur les figures, l'un des tronçons 38 occupe la partie centrale du tambour. L'autre tronçon 40 présente une découpe centrale de largeur correspondant à celle du tronçon 38. Cette solution permet d'avoir un arc d'enroulement de chaque tronçon 38 ou 40 qui peut atteindre plusieurs tours.

Pour éviter tout jeu, les tronçons doivent être maintenus tendus en permanence. Ce résultat peut être atteint en munissant l'un des tronçons, 38 par exemple, d'une semelle d'appui sur l'extrémité de la voie et l'autre tronçon, 40 par exemple, d'une semelle 42 qu'un ressort 44 (ressort en tôle ondulée par exemple) tend à déplacer dans le sens mettant les tronçons 38 et 40 en tension.

Lorsque les articulations doivent avoir des caractéristiques de joint universel, elles peuvent être constituées par des joints de Cardan ou des rotules. La seconde solution permet d'avoir un encombrement beaucoup plus faible. Mais elle exige une lubrification. Lorsque le dispositif doit être utilisé dans l'espace, par exemple dans un mécanisme d'orientation de réflecteur, il semble a priori difficile d'utiliser une rotule lubrifiée. Ce problème est écarté en utilisant des rotules du genre montré en figures 6 et 7, limitant la volatilisation du solvant. La bille 46 de la rotule se limite à un anneau sphérique, du fait que le débattement angulaire requis autour d'un axe reliant les deux rotules 28 reste toujours faible. La bille est emprisonnée dans une fourche 48 fixée rigidement au bras de transmission 26. Elle tourne dans une bague 50 fixée à une plaque 52 solidarisée du chariot 22. Pour limiter l'évaporation du solvant, on créée un espace confiné autour de la rotule. Cet espace est délimité par la plaque 52, une plaque 54 fixée au bras 26 et un soufflet métallique déformable 56 reliant les plaques. Un trou 56 de faible dimension est percé dans une des plaques de façon à équilibrer les pressions dans l'espace confiné et à l'extérieur tout en limitant les échanges et en particulier les fuites de lubrifiant vers l'espace ambiant.

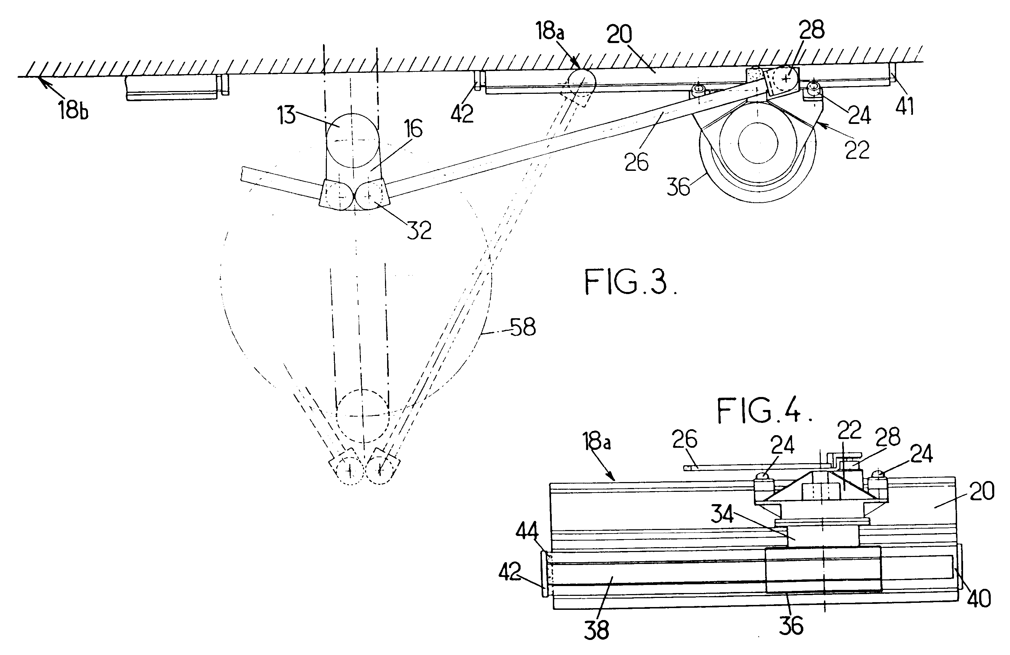

Le mécanisme qui vient d'être décrit permet de donner au bras 13 une orientation quelconque dans une zone schématisée sous forme du cercle 58 sur la figure 3 et ce avec un dispositif de constitution simple et relativement peu encombrante, ne présentant pas de jeu.

Le dispositif selon l'invention est susceptible de nombreuses applications autres que celle qui vient d'être décrite. Il peut être complété par un troisième bras de transmission relié à un chariot supplémentaire se déplaçant sur une voie convergent avec les deux autres. Dans tous les cas, la matrice de transcodage permettant de déterminer l'angle de rotation à donner aux rotors 34, à partir d'une position de référence, reste toujours simple. L'angle de rotation peut être mesuré à l'aide d'un capteur incorporé à chaque moteur ou d'un capteur porté par le chariot.

Il doit être entendu que la portée du présent brevet s'étend à de telles variantes ainsi que généralement qu'à toutes autres restant dans le cadre des équivalences.

## Revendications

1. Dispositif de déplacement permettant de donner à un organe une position déterminée dans un domaine de dimension limitée, comprenant deux bras de transmission rigides (26) ayant chacun une extrémité articulée audit organe (16) et une autre extrémité reliée par une articulation à un chariot respectif (22) de déplacement sur une voie parallèle à une direction déterminée, caractérisé en ce que chacun des chariots (22) porte un tambour rotatif (36) autour d'un axe perpendiculaire à ladite direction et muni de moyens d'entraînement, une bande inextensible et flexible tendue entre deux ancrages alignés suivant ladite direction et ne pouvant pas glisser sur le tambour est enroulée sur ce dernier.

2. Dispositif suivant la revendication 1, caractérisé en ce que la bande est en deux tronçons (38,40) fixés chacun à un ancrage respectif et placés côte à côte sur le tambour (36), chacun avec un arc d'enroulement sur le tambour.

3. Dispositif selon la revendication 2, caractérisé en ce qu'un des tronçons est relié rigidement à son ancrage tandis que l'autre tronçon (38) est relié à son ancrage par des moyens élastiques (44) permettant de maintenir les deux tronçons tendus.

4. Dispositif selon l'une quelconque des revendications précédentes, caractérisé en ce que les articulations (28,32) des bras de transmission (26) sont universelles et en ce que le dispositif de déplacement comporte des moyens supplémentaires supprimant un degré de liberté dans le déplacement de l'organe (16), tel qu'un joint de Cardan (17).

5. Application du dispositif selon l'une quelconque des revendications précédentes à un mécanisme de pointage d'un réflecteur d'antenne, comprenant un bras (13) relié à un support (12) par un joint de Cardan placé au foyer du réflecteur et fixé audit organe (16) du dispositif.

6. Application selon la revendication 5, caractérisé en ce que les articulations des bras de transmission (26) sont constitués par des rotules lubrifiées.

7. Application selon la revendication 5 ou 6, à un mécanisme d'orientation d'antenne sur satellite, caractérisé en ce que les rotules sont placées chacune dans un compartiment de confinement délimité par un soufflet déformable (56).

## Patentansprüche

1. Verschiebevorrichtung, um einem Bauteil eine in einem Bereich begrenzter Abmessung festgelegte Position zu verleihen, mit zwei starren Übertragungsarmen (26), von denen jeder ein am Bauteil (16) gelenkig angebrachtes Ende und ein weiteres Ende aufweist, das durch ein Gelenk mit einem entsprechenden Schlitten (22) zur Verschiebung auf einer zu einer festgelegten Richtung parallelen Bahn verbunden ist,
**dadurch gekennzeichnet, daß** jeder der Schlitten (22) eine um eine zur genannten Richtung senkrechten Achse drehbare und mit einer Antriebseinrichtung versehene Trommel (36) trägt, und ein undehnbares und flexibles, zwischen zwei entlang der genannten Richtung ausgerichteten Verankerungen gespanntes Band, das nicht auf der Trommel gleiten kann, auf letzterer aufgewickelt ist.

2. Vorrichtung nach Anspruch 1, **dadurch gekennzeichnet,** **daß** das Band zwei Abschnitte (38,40) aufweist, von denen jeder an einer jeweiligen Verankerung befestigt ist, und die nebeneinander auf der Trommel (36), jeder mit einem Umschlingungswinkel auf der Trommel, angeordnet sind.

3. Vorrichtung nach Anspruch 2, **dadurch gekennzeichnet,** **daß** einer der Abschnitte starr mit seiner Verankerung verbunden ist, während der andere Abschnitt (38) mit seiner Verankerung durch eine elastische Einrichtung (44) verbunden ist, wodurch die beiden Abschnitte gespannt gehalten werden können.

4. Vorrichtung nach einem der vorhergehenden Ansprüche, **dadurch gekennzeichnet, daß** die Gelenke (28,32) der Übertragungsarme (26) Universalgelenke sind, und daß die Verschiebungsvorrichtung eine zusätzliche Einrichtung, wie beispielsweise ein Kardangelenk (17), aufweist, die einen Freiheitsgrad in der Verschiebung des Bauteils (16) verhindert.

5. Verwendung der Vorrichtung nach einem der vorhergehenden Ansprüche in einem Mechanismus zur Ausrichtung eines Reflektors einer Antenne, mit einem Arm (13), der durch ein im Brennpunkt des Reflektors angeordnetes Kardangelenk mit einem Gestell (12) verbunden und am genannten Teil (16) der Vorrichtung befestigt ist.

6. Verwendung nach Anspruch 5, **dadurch gekennzeichnet, daß** die Gelenke der Übertragungsarme (26) von geschmierten Drehgelenken gebildet sind.

7. Verwendung nach Anspruch 5 oder 6, bei einem Mechanismus zur Ausrichtung einer Antenne auf einem Satelliten, **dadurch gekennzeichnet, daß** die Drehgelenke jeweils in einem durch einen verformbaren Balgen (56) abgegrenzten Begrenzungsgehäuse angeordnet sind.

## Claims

1. A displacement device enabling a member to be given a predetermined position in a limited range of dimension, said device comprising two rigid transmission arms (26) each having one end articulated to said member (16) and another end connected via an articulation to a respective displacement carriage (22) moving on a path parallel to a predetermined direction, characterised in that each of the carriages (22) carries a drum (36) which rotates about an axis perpendicular to said direction and has driving means, an inextensible and flexible band which is stretched between two anchorages aligned in said direction and which cannot slide on the drum being wound thereon.

2. A device according to Claim 1 characterised in that the band is in two portions (38, 40) which are each fixed to a respective anchorage and are disposed side by side on the drum (36), each with an arc of wrap on the drum.

3. A device according to Claim 2 characterised in that one of the portions is rigidly connected to its anchorage, while the other portion (38) is connected to its anchorage via resilient means (44) enabling the two portions to be kept taut.

4. A device according to any of the preceding claims characterised in that the articulations (28, 32) of the transmission arms (26) are universal and the displacement device comprises extra means suppressing a degree of freedom in the displacement of the member (16), such as a universal joint (17).

5. Application of the device according to any of the preceding claims to a mechanism for sighting an antenna reflector, comprising an arm (13) which is connected to a support (12) via a universal joint disposed at the focal point of the reflector and attached to said member (16) of the device.

6. Application according to Claim 5 characterised in that the articulations of the transmission arms (26) are formed by lubricated swivel joints.

7. Application according to Claims 5 or 6 to a mechanism for the orientation of an antenna on a satellite, characterised in that the swivel joints are each disposed in a confinement compartment bounded by a deformable bellows (56).
